(19) Europäisches Patentamt
European Patent Office
Office européen des brevets

(11) Publication number : **0 515 227 A2**

(12) **EUROPEAN PATENT APPLICATION**

(21) Application number : **92304690.8**

(51) Int. Cl.[5] : **B29D 30/30**

(22) Date of filing : **22.05.92**

(30) Priority : **24.05.91 JP 149483/91**

(43) Date of publication of application :
**25.11.92 Bulletin 92/48**

(84) Designated Contracting States :
**DE ES FR GB IT**

(71) Applicant : **BRIDGESTONE CORPORATION**
**10-1 Kyobashi 1-Chome, Chuo-Ku**
**Tokyo 104 (JP)**

(72) Inventor : **Okuyama, Koji**
**6-7, Arajuku-Machi 2-Chome**
**Kawagaoe City, Saitama Pref. (JP)**
Inventor : **Nagano, Jun**
**4-2-1-402, Nakatomiminami**
**Tokorozawa City, Saitama Pref. (JP)**
Inventor : **Ishiwatari, Takashi**
**17-8, Higashiyama 3-Chome**
**Meguro-Ku, Tokyo (JP)**

(74) Representative : **Whalley, Kevin et al**
**MARKS & CLERK 57/60 Lincoln's Inn Fields**
**London WC2A 3LS (GB)**

(54) **Method and apparatus for attaching belt-shaped member to forming drum.**

(57) A method and an apparatus for attaching a belt-shaped member (15) to a forming drum (14). A belt-shaped member is transferred to the forming drum to pressure-join the front end of the belt-shaped member to the forming drum and the position of the rear end of the belt-shaped member is measured to obtain an excess or a shortage in length of the member. The rear end of the belt-shaped member is grasped by means of a grasping unit (68). Thereafter, the grasping unit is moved toward the forming drum (14), while the forming drum is rotating at a circumferential speed which is different from the moving speed of the grasping unit dependently upon the excess or the shortage of the member, thereby attaching the belt-shaped member to the forming drum and joining the front and rear ends of the member with each other. As an alternative, the grasping unit (68) is moved toward and away from the forming drum (14) dependently upon the excess or the shortage of the member (15) to make zero the excess or the shortage, while the grasping unit is moved at a speed of a constant ratio to the circumferential speed of the forming drum.

FIG_1

23
22
29
12
27
25
43
20
21
80
15
13
15
81
14
11

EP 0 515 227 A2

This invention relates to a method and an apparatus for attaching onto a forming drum a belt-shaped member which is cut in a length substantially equal to one circumferential length of the forming drum.

A method and an apparatus for attaching a belt-shaped member to a forming drum have been known which was disclosed, for example, in Japanese Patent Application Laid-open No. 1-303,163. In the method and apparatus of the disclosed prior art, after the front end and the rear end of a belt-shaped member cut in a length substantially equal to the circumferential length of a forming drum are grasped by front end grasping means and rear end grasping means, respectively, these front and rear end grasping means with the grasped belt-shaped member are moved in synchronism with each other to plate-shaped transfer means to transfer the belt-shaped member to a position above the plate-shaped transfer means. In this position, the front and rear grasping means are moved away from each other to eliminate any loose portion or slack of the belt-shaped member. The belt-shaped member is then attracted onto the plate-shaped transfer means so that the member is transferred from the front and rear grasping means to the plate-shaped transfer means. Thereafter, the plate-shaped transfer means is moved to the forming drum to attach the belt-shaped member to the circumference of the rotating forming drum.

In such method and apparatus of the prior art, however, after the belt-shaped member has been once transferred onto the plate-shaped transfer means, the belt-shaped member is supplied from the plate-shaped transfer means to forming drum. Therefore, the apparatus is complicated in construction and the operation becomes troublesome to lower the operation efficiency. Moreover, any measurement and modification of the lengths of belt-shaped members are not considered in the method and apparatus. Therefore, if a belt-shaped member is cut with an error in length, its front and rear ends may be incompletely joined due to the error.

It is an object of the invention to provide a method of attaching a belt-shaped member to a forming drum, which is carried out with high efficiency and able to produce high quality tires in easy operation.

It is another object of the invention to provide an apparatus for attaching a belt-shaped member to a forming drum, which is simple in construction and easy to operate and is able to produce high quality tires.

In order to accomplish the object, the method of attaching to a forming drum a belt-shaped member cut in a length substantially equal to the circumferential length of the forming drum according to the invention comprises steps of transferring the belt-shaped member to the forming drum to pressure-join the front end of the belt-shaped member to the forming drum at a predetermined position thereon, measuring the position of the rear end of the belt-shaped member to obtain any one of an excess and a shortage in length relative to a set length of the member on the basis of the measured result, grasping the rear end of the belt-shaped member by means of a grasping unit, and moving the grasping unit toward the forming drum, while rotating the forming drum to attach the belt-shaped member to the circumference of the forming drum and to join the front and rear ends of the member with each other, and in attaching the belt-shaped member to the forming drum, rendering different the circumferential speed of the forming drum and the moving speed of the grasping unit dependently upon the obtained one of the excess and the shortage in length of the member, thereby making zero the one of the excess and the shortage upon completion of the attaching the belt-shaped member to the forming drum.

In the second aspect of the invention, the method of attaching to a forming drum a belt-shaped member cut in a length substantially equal to the circumferential length of the forming drum, comprises steps of transferring the belt-shaped member to the forming drum to pressure-join the front end of the belt-shaped member to the forming drum at a predetermined position thereon, measuring the position of the rear end of the belt-shaped member to obtain any one of an excess and a shortage in length relative to a set length of the member on the basis of the measured result, grasping the rear end of the belt-shaped member by means of a grasping unit, and moving the grasping unit toward and away from the forming drum dependently upon the obtained one of the excess and the shortage in length of the member to make zero the one of the excess and the shortage, and moving the grasping unit at a speed of a constant ratio to the circumferential speed of the forming drum, while rotating the forming drum, thereby attaching the belt-shaped member to the circumference of the forming drum and to join the front and rear ends of the member with each other.

The apparatus for attaching a belt-shaped member to a forming drum according to the invention comprises transfer means for transferring to a forming drum the belt-shaped member cut in a length substantially equal to the circumferential length of the forming drum, pressure-joining means for pressure-joining the front end of the belt-shaped member transferred by the transfer means to a predetermined position on the forming drum, measuring means for measuring the position of the rear end of the belt-shaped member whose front end has been pressure-joined with the forming drum, control means for obtaining any one of an excess and a shortage in length of the belt-shaped member relative to a set length on the basis of the measured result obtained by the measuring means, a grasping unit for grasping the rear end of the belt-shaped member whose front end has been pressure-joined with the forming drum, and driving means for moving the grasping unit toward and away from the forming drum, the movement of the grasping unit by the driving means being controlled by means of the control means to make zero the one of the excess and the shortage upon completion of the attaching the belt-shaped member to the forming drum.

In attaching a belt-shaped member to a forming drum, the belt-shaped member cut in a length substantially equal to one circumference of the forming drum is first transferred to the forming drum by means of the transfer means. When the front end of the belt-shaped member has arrived at a predetermined position above the forming drum, the front end of the belt-shaped member is pressure-joined with the forming drum by means of the pressure-joining means. Under this state, the position of the rear end of the belt-shaped member is measured or detected by the measuring means and the measured result is sent to the control means. An excess or a shortage in length of the belt-shaped member relative to a set length is obtained on the basis of the measured result by means of the control means. At this time, the rear end of the belt-shaped member is grasped by means of the grasping unit.

Thereafter, the driving means is actuated to move the grasping unit to the forming drum, while the forming drum is rotated to attach the belt-shaped member onto the circumference of the forming drum. At this time, the moving speed of the grasping unit is controlled depending upon the excess or the shortage in length of the belt-shaped member by means of the driving means with the aid of the control means in a manner that the moving speed of the grasping means is different from the circumferential speed of the forming drum, thereby making zero the excess or the shortage in length of the belt-shaped member upon completion of the attaching the belt-shaped member onto the forming drum.

In order to make zero the excess or the shortage of the belt-shaped member, the grasping unit may be moved toward or away from the forming drum by means of the driving means with the aid of the control means after grasping the belt-shaped member by means of the grasping unit and before attaching the member to the forming drum. In this case, during attaching the belt-shaped member to the forming drum, the moving speed of the grasping unit has a constant ratio to the circumferential speed of the forming drum. When the attaching of the belt-shaped member to the forming drum has been completed, the front and rear ends of the member are joined with each other.

According to the invention, as the belt-shaped member is directly supplied onto the forming drum without requiring plate-shaped transfer means, the efficiency of attaching operation can be improved and the apparatus for carrying out the invention can be simplified. Moreover, the modification of the length of the belt-shaped member can be performed over its entire length so that the member is elongated or contracted uniformly over its length. Consequently, the quality of tires produced by the belt-shaped members thus attached to the forming drum is improved because there is no risk of local change in thickness and widths of the members or incomplete joining of front and rear ends of the members.

In order to more improve the accuracy in modification of the length of the belt-shaped member, according to the invention after pressure-joining the front end of the belt-shaped member to the forming drum, the position of the front end of the belt-shaped member is measured by means of the measuring means, and the excess or the shortage in length of the member is obtained on the basis of both the results of the positions of the front and rear ends of the belt-shaped member.

In order to more improve the accuracy of attaching the belt-shaped member in width directions, when measuring the front end of the belt-shaped member, the front end of the member in the width direction is measured, while when measuring the rear end of the belt-shaped member, the rear end of the member in the width direction is measured. On the basis of both the measured results of the front and rear ends in the width directions, the shifted distance of the rear end in the width direction is obtained relative to the front end of the member, and the grasping unit and the rear end of the belt-shaped member are moved in the width direction so as to make zero the shifted distance before attaching the belt-shaped member to the forming drum.

In the case that the pressure-joining of the front end of the belt-shaped member to the forming drum is effected with high accuracy, only the position of the rear end of the member in the width direction may be measured. In this case, a shifted distance of the rear end of the belt-shaped member in the width direction relative to the attaching position on the forming drum is obtained and the control is performed to make zero the obtained shifted distance.

The invention will be more fully understood by referring to the following detailed specification and claims taken in connection with the appended drawings.

Fig. 1 is a schematic front view illustrating the apparatus of the first embodiment according to the invention;

Fig. 2 is a fragmentary front view illustrating the proximity of grasping means of the apparatus shown in Fig. 1;

Fig. 3 is a sectional view taken along the line III-III in Fig. 2;

Fig. 4 is a partial sectional view seen in the direction shown by arrows IV in Fig. 2; and

Fig. 5 is a schematic front view illustrating the apparatus of the second embodiment according to the invention.

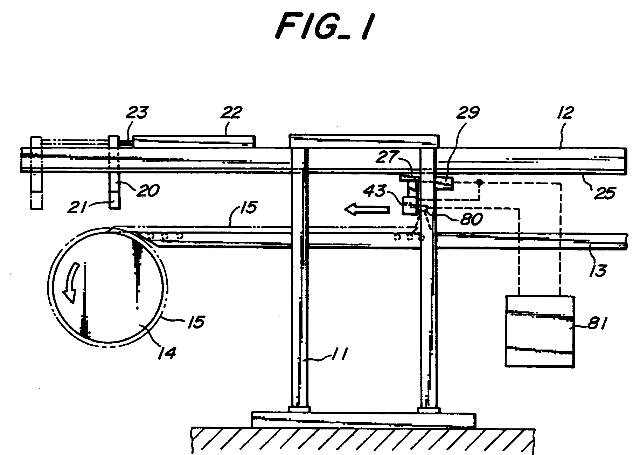

Referring to Fig. 1, the apparatus of the first embodiment according to the invention comprises a frame 11 and a horizontal beam 12 extending from the left to the right viewed in the drawing and fixed to the upper portion of the frame 11. A conveyor 13 as transfer means is arranged below the beam 12 and extending in parallel with the beam 12. A belt-shaped member 15 is transferred by the conveyor 13 forwardly or toward a forming drum 14. The belt-shaped member 15 such as a tread rubber or the like has been cut into a length substantially equal to one circumferential length of the forming drum 14. The forming drum 14 is located immediately below the forward end of the conveyor 13 and is rotatable about a horizontal rotating axis perpendicular to the conveyor 13.

A movable frame 20 is supported movably in the extending direction of the beam 12 on its forward end. Pressure-joining means 21 having a pressure-joining roller (not shown) is vertically movably supported by the lower end of the movable frame 20. When the belt-shaped member 15 has been transferred by the conveyor 13 to arrive at a predetermined position on the forming drum 14 with the forward end of the member 15, the pressure-joining means 21 is lowered so as to pressure-join the forward end of the belt-shaped member 15 to the forming drum 14. A cylinder 22 is fixed to the beam 12 rearward of the movable frame 20 so as to extend in parallel with the beam 12 and has a piston rod whose rod end is connected to the movable frame 20. Upon completion of the pressure joining of the belt-shaped member 15 to the forming drum, the pressure-joining means 21 is raised and then moved or retracted by the action of the cylinder 22 to the position shown in phantom lines in Fig. 1.

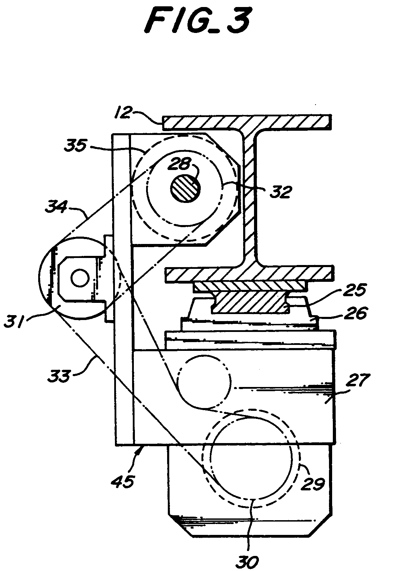

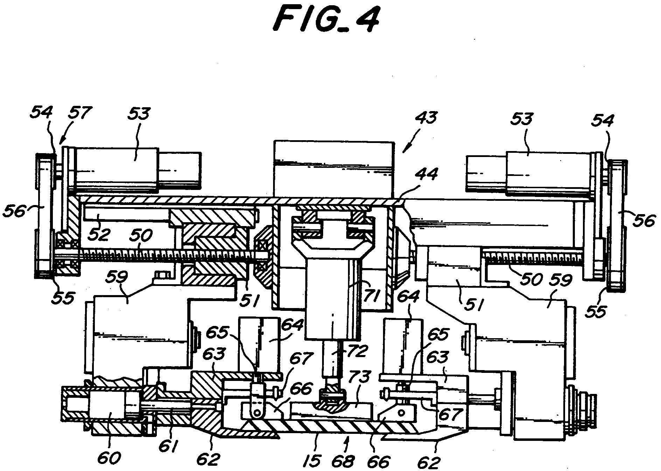

Referring to Figs. 1, 2, 3 and 4, under the beam 12 is provided a rail 25 extending along the beam 12, and a slide bearing 26 is fixed to a slide frame 27 and slidably engaged with the rail 25. A screw shaft 28 is arranged on one side of the beam 12 so as to extend in parallel therewith and has both ends fixed to the beam 12. On the slide frame 27 is mounted a motor 29 whose rotating driving force is transmitted through pulleys 30, 31 and 32 and belts 33 and 34 to a screw block 35 rotatably supported on the upper portion of the slide frame 27. The screw block 35 is threadedly engaged with the screw shaft 28.

As a result, when the motor 29 is energized to rotate the screw block 35, the screw bock 35 and the slide frame 27 are moved in the extending directions of the beam 12, while being guided by the rail 25. A vertical screw shaft 36 is rotatably supported on the slide frame 27. A motor 37 is mounted on the slide frame 27, whose rotating driving force is transmitted to the vertical screw shaft 36. Grasping means 43 includes a grasping unit later described and a movable frame 44. Onto the movable frame 44 are secured a plurality of screw blocks 46 adapted to engage the screw shaft 36. As a result, the grasping means 43 is raised and lowered by the rotation of the screw shaft 36. The screw shaft 28, the motor 29, the pulleys 30, 31 and 32, the belts 33 and 34 and the screw block 35 form as a whole driving means 45 for driving the grasping means 43 having the grasping unit toward and away from the forming drum 14.

On both halves of the movable frame 44 are rotatably supported a pair of horizontal screw shafts 50 whose threads are turned in opposite sides. These screw shafts 50 extend perpendicularly to the beam 12 and threadedly engage screw blocks 51, respectively. The screw blocks 51 slidably engage with a pair of rails 52 secured to the movable frame 44, respectively. The movable frame 44 is provided at both ends with motors 53 fixed thereto, whose rotating driving force is transmitted through pulleys 54 and 55 and belts 56 to the screw shafts 50, respectively. When the motors 53 are energized to rotate the screw shafts 50 in opposite directions, the screw blocks 51 move through equal distances in the same direction.

The screw shafts 50, the screw blocks 51, the rails 52, the motors 53, the pulleys 54 and 55 and the belts 56 form as a whole displacement means 57 by which a belt-shaped member 15 grasped by the grasping unit later described is displaced in the width directions of the member 15. If the motors 53 are energized to rotate the screw shafts 50 in the same directions, the screw blocks 51 move through equal distances in the opposite directions toward or away from each other.

Movable blocks 59 are fixed to the screw blocks 51, respectively, and are provided on their lower ends with cylinders 60, respectively, in parallel with the screw shafts 50. Each of the cylinders 60 has a piston rod 61 provided at its rod end with a lower pawl 62 adapted to engage the lower surface of one width edge of the belt-shaped member 15. The lower pawls 62 are moved in the width directions of the belt-shaped member 15 toward and away from each other by extension and retraction of the piston rods 61 of the cylinders 60. Blocks 63 are fixed to the rod ends of the cylinders 60, respectively, and provided with vertical cylinders 64 fixed to the blocks 63, respectively. An upper pawl 66 is rockably connected to the rod end of the piston rod 65 of each of the vertical cylinders 64 to form a pair with the one of lower pawls 62. The upper pawls 66 are moved toward and away from the lower pawls 62 by actuating the vertical cylinders 64, respectively, so that both side edges of the rear end of the belt-shaped member 15 are grasped by the upper and lower pawls 66 and 62, respectively.

Stoppers 67 are provided to prevent the upper pawls 66 from rocking, respectively. The upper and lower pawls 66 and 62 on both sides form as a whole a grasping unit 68 which grasps the rear end of the belt-shaped member 15 when the front end of the belt-shaped member 15 is pressure-joined to the forming drum 14 as described above. To the center portion of the movable frame 44 is rotatably connected the head end of a cylinder 71 having a piston rod 72 whose rod end is connected to a pressure-joining member 73 rockably relative thereto. The pressure-joining member 73 is positioned between the upper pawls 66 and urges and pressure-joins the belt-shaped member 15 against the forming drum 14 when the cylinder 71 is actuated to extend its piston rod 72.

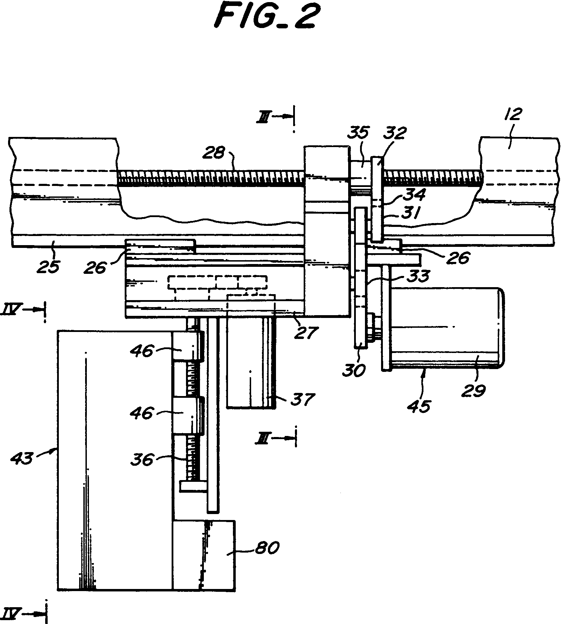

Referring to Figs. 1 and 2, to the rear end of the grasping means 43 is fixed an image pickup device 80 as measuring means, for example, a camera with an electronic shutter for measuring or detecting in width and longitudinal directions the rear end of the belt-shaped member 15 whose front end is pressure-joined to the forming drum 14 at the predetermined position thereon. The measured results are fed to control means 81, for example, a microcomputer. Although the belt-shaped member is formed to a set length (slightly shorter than the set length as the case may be) by cutting as described above, the length of the belt-shaped member 15 may be somewhat different from the set length due to errors in cutting and variation with time after cutting. Consequently, excess or shortage of the belt-shaped member 15 relative to the set length is determined on the basis of the measured results of the longitudinal position of the member by means of the control means 81 in the following manner.

When the image pickup device 80 stopped at the measuring position photographs or detects the rear end of a belt-shaped member having the set length, the position of the rear end is previously determined. Therefore, the excess or shortage of the belt-shaped member 15 can be obtained by a difference between the previously determined position (previously memorized position) and the actually photographed rear end of the member 15 obtained by image processing. Moreover, there is a case that the belt-shaped member 15 is meandering. In this case, a shifted distance of the rear end of the belt-shaped member 15 in the width direction is obtained by comparing the measured result of the position of the member 15 in the width direction and the attached position (previously memorized position) of the member 15 on the forming drum by means of the control means 81. On the basis of the thus obtained excess or shortage in the lengthwise direction and the shifted distance in the width direction, the driving means 45 and the displacement means 57 are controlled by means of the control means 81.

How to carry out the method of the invention by the use of the apparatus of the first embodiment according to the invention will be explained hereinafter.

First a belt-shaped member 15 is formed by cutting into a length substantially equal to one circumferential length of the forming drum 14. The belt-shaped member 15 is supplied onto the conveyor 13 and then transferred to the forming drum 14 by means of the conveyor 13. When the front end of the belt-shaped member has arrived at the predetermined position on the forming drum 14, the conveyor 13 is stopped. The pressure-joining member 21 is then lowered to urge the front end of the belt-shaped member 15 against the forming drum 14 by means of the pressure-joining roller so that the front end of the belt-shaped member 15 is pressure-joined to the predetermined position on the forming drum 14. At this time, the image pickup device 80 is waiting at the measuring position immediately above the rear end of the belt-shaped member 15.

The pressure-joining means 21 is then raised. Thereafter, the cylinder 22 is actuated to extend its piston rod 23 so as to move or retract the pressure-joining means 21 to the position shown in the phantom lines in Fig. 1. At this moment, the rear end of the belt-shaped member 15 in the width and longitudinal directions are measured or detected by means of the image pickup device 80, and the measured results are fed to the control means 81. The control means 81 is then operated to obtain the excess or shortage in length of the belt-shaped member 15 and the shifted distance of the rear end of the member 15 in the width direction relative to the attaching position on the forming drum 14 on the basis of the measured results.

The motor 37 is then energized to rotate the screw shaft 36 so that the grasping means 43 is lowered. The downward movement of the grasping means 43 is stopped when the belt-shaped member 15 has just arrived at a position between the upper pawls 66 and the lower pawls 62. The motors 53 are energized to rotate the screw shafts 50, the lower pawls 62 move toward each other and likewise the upper pawls 66 move toward each other, so that the lower pawls 62 are positioned under the rear end of the belt-shaped member 15 only predetermined distances, respectively. The cylinders 64 are actuated to extend their piston rods 65 so as to lower the upper pawls 66 so that the rear end of the belt-shaped member 15 is grasped on both side by means of the grasping unit 68 comprising the upper and lower pawls 66 and 62. Thereafter, the motor 37 is energized to raise the grasping means 43 so that whole the belt-shaped member 15 is raised from the conveyor 13.

In this case, if the width position of the rear end of the belt-shaped member 15 (for example, the center of the rear end in the width direction) is shifted in one width direction from the attaching position on the forming drum 14 (for example, the center of the attaching position), signals corresponding to the shifted distance are sent from the control means 81 to the motor 53 so as to energize the motor 53. As a result, the screw shafts 50 are rotated in opposite directions so as to move the grasping unit 68 grasping the rear end of the belt-shaped member 15 until the shifted distance becomes zero. Consequently, the width position of the rear end of the belt-shaped member 15 is brought into coincidence with the attaching position on the forming drum 14. Moreover, when the centering of the belt-shaped member 15 has been exactly performed so that the shifted distance in the width direction is substantially zero, the modification in the width direction above described is not required.

The forming drum 14 is then rotated, while the motor 29 of the driving means 45 is energized to rotate the screw block 35. As a result, the grasping means 43 grasping the rear end of the belt-shaped member 15 is moved toward the forming drum 14 so that the belt-shaped member 15 is fed to the forming drum and attached to the circumference of the forming drum 14. In such an attaching operation, signals corresponding to the excess or shortage in length of the belt-shaped member 15 are sent from the control means 81 to the motor 29 so that the moving speed of the grasping means 43 toward the forming drum 14 or the feeding speed of the belt-shaped member 15 is made different from the circumferential speed of the forming drum 14. As a result, the belt-shaped member is elongated or contracted over its entire length to modify its longitudinal length so that the excess or shortage in length of the belt-shaped member 15 becomes zero and its length is equal to the set length.

The "set length" used herein is equal to the circumferential length of the forming drum in the case that the front and rear ends of the belt-shaped member 15 are butt-joined with each other. On the other hand, in the case that the front and rear ends are lap-joined with each other, the "set length" is equal to the overlapping length at the joined ends plus the circumferential length of the forming drum. If the front and rear ends of the belt-shaped member 15 are joined with a clearance therebetween less than a predetermined value (partially butt-joining or lap-joining), the "set length" is equal to a predetermined length between the circumferential length of the forming drum 14 minus the predetermined value and the circumferential length of the forming drum 14.

The excess or shortage of the belt-shaped member 15 may be made zero in a different manner from the above. Namely, after grasping the rear end of the belt-shaped member 15 by the grasping unit 68 and before attaching the belt-shaped member 15 to the forming drum 14, the grasping unit 68 may be moved toward or away from the forming drum 14 by a distance equal to the excess or shortage in length of the belt-shaped member 15 by sending signals from the control means 81 to the motor 29. In this case, during attaching the belt-shaped member to the forming drum, the moving speed of the grasping unit 68 has a constant ratio to the circumferential speed of the forming drum 14.

When the belt-shaped member 15 over its length has been attached to the forming drum 14, the motor 29 is deenergized to stop the grasping means 43. Thereafter, the cylinder 71 is actuated to extend its piston rod 72 so as to urge the width center portion of the rear end of the belt-shaped member 15 against the forming drum 14 by means of the pressure-joining member 73. The width center portions of the front and rear ends of the belt-shaped member 15 are joined with each other in this manner.

The cylinders 60 are then actuated to retract their piston rods 61 so as to withdraw the lower pawls 62 from the positions under the belt-shaped member 15. Thereafter, the cylinders 64 are actuated to extend their piston rods 65 so as to urge both the width edges of the rear end of the belt-shaped member 15 to both the width edges of the front end of the belt-shaped member 15 so that the front and rear ends of the belt-shaped member 15 are joined uniformly over their widths. The cylinders 64 and the cylinder 71 are then actuated to retract their piston rods 65 and 72 so as to raise the upper pawls 66 and the pressure-joining member 73. The motor 37 is then energized to raise the grasping means 43 which is then retracted to its initial position by means of the driving means 45.

In this embodiment, as the belt-shaped member 15 is directly supplied onto the forming drum 14 without requiring plate-shaped transfer means in this manner, the efficiency of attaching operation can be improved and the apparatus for carrying out the invention can be simplified. Moreover, the modification of the length of the belt-shaped member 15 can be performed uniformly over its entire length so that the member 15 is elongated or contracted uniformly over its length. Consequently, the quality of tires produced by the belt-shaped members thus attached to the forming drum is improved because there is no risk of local change in thicknesses and widths of the members or incomplete joining of front and rear ends of the members.

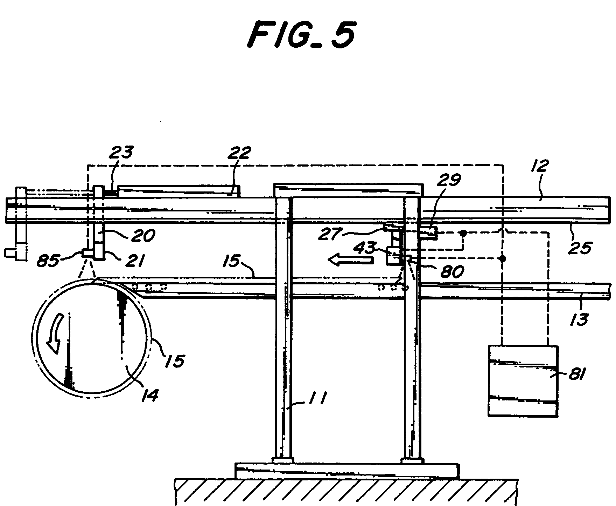

Fig. 5 illustrates the second embodiment of the invention. In this embodiment, in addition to the image pickup device 80, a further image pickup device 85 as measuring means is mounted onto the front end of the pressure-joining means 21, which is similar in construction to that of the device 80. The position of the front end of the belt-shaped member 15 in its longitudinal direction attached to the forming drum 14 is measured or detected immediately after the pressure-joining by means of the further image pickup device 85, and the measured result is fed to the control means 81. Upon receiving the measured result, the control means 81 processes the data to obtain the actual position of the front end of the belt-shaped member 15 in the longitudinal direction and further obtain a shifted difference between the obtained actual position and the predetermined position where the front end should be attached (previously memorized position).

The excess or shortage in length of the belt-shaped member 15 is then obtained by summing up the obtained shifted difference and the shifted distance at the rear end of the member 15. Thereafter, signals corresponding to the excess or shortage in length of the belt-shaped member 15 are sent to the driving means 45 to modify the length of the belt-shaped member 15 in the same manner as described above. In this manner, the joining of the belt-shaped member 15 can be effected in a better state so that the quality of tires produced by the belt-shaped members is more improved.

In the case that the positions of the front and rear ends of the belt-shaped member 15 in the longitudinal direction are measured by means of the image pickup devices 85 and 80, the actual length of the member 15 may be obtained on the basis of the measured results received from the image pickup devices 85 and 80 and the excess or shortage of the member 15 may be obtained by comparing the actual length with the set length of the member 15.

Moreover, the position of the front end of the member 15 in the width direction thereof pressure-joined with the forming drum 14 may be simultaneously measured by means of the image pickup device 85 and the measured results may be fed to the control means 81. In this case, after obtaining the actual position of the front end of the member 15 in the width direction by means of the control means 81, the shifted distance of the rear end of the member 15 in the width direction relative to the actual position of the front end of the member 15 is obtained, and signals corresponding to the shifted distance of the rear end of the member 15 in the width direction are sent to the displacement means 57 before attaching to move the grasping unit 68 in the width direction, thereby making the shifted distance of the rear end of the member 15 zero. In this manner, the joining of the belt-shaped member 15 can be effected in a better state so that the quality of tires produced by the belt-shaped members is more improved.

Moreover, while the belt-shaped member 15 is grasped by means of the upper and lower pawls 66 and 62 on both sides, it may be grasped with the aid of vacuum or negative pressure in the present invention. Further, photoelectric sensors or the like may be utilized for measuring the length of the belt-shaped member 15.

As can be seen from the above explanation, according to the invention the attaching operation of a belt-shaped member to a forming drum can be performed by an apparatus simple in construction with high efficiency and hence according to the invention tires high in quality can be produced.

While the invention has been particularly shown and described with reference to preferred embodiments thereof, it will be understood by those skilled in the art that the foregoing and other changes in form and details can be made therein without departing from the spirit and scope of the invention.

## Claims

1. A method of attaching to a forming drum (14) a belt-shaped member (15) cut in a length substantially equal to the circumferential length of the forming drum, comprising steps of transferring the belt-shaped member (15) to the forming drum (14) to pressure-join the front end of the belt-shaped member to the forming drum at a predetermined position thereon, measuring the position of the rear end of the belt-shaped member to obtain any one of an excess and a shortage in length relative to a set length of the member on the basis of the measured result, grasping the rear end of the belt-shaped member by means of a grasping unit (68), and moving the grasping unit toward the forming drum, while rotating the forming drum to attach the belt-shaped member to the circumference of the forming drum and to join the front and rear ends of the member with each other, and in attaching the belt-shaped member to the forming drum, rendering different the circumferential speed of the forming drum (14) and the moving speed of the grasping unit (68) dependently upon the obtained one of the excess and the shortage in length of the member, thereby making zero the one of the excess and the shortage upon completion of the attaching of the belt-shaped member to the forming drum.

2. A method of attaching to a forming drum (14) a belt-shaped member (15) cut in a length substantially equal to the circumferential length of the forming drum, comprising steps of transferring the belt-shaped member (15) to the forming drum (14) to pressure-join the front end of the belt-shaped member to the forming drum at a predetermined position thereon, measuring the position of the rear end of the belt-shaped member to obtain any one of an excess and a shortage in length relative to a set length of the member on the basis of the measured result, grasping the rear end of the belt-shaped member by means of a grasping unit (68), and moving the grasping unit toward and away from the forming drum dependently upon the obtained one of the excess and the shortage in length of the member to make zero the said one of the excess and the shortage, and moving the grasping unit (68) at a speed of a constant ratio to the circumferential speed of the forming drum, while rotating the forming drum, thereby attaching the belt-shaped member to the circumference of the forming drum and to join the front end and rear ends of the member (15) with each other.

3. A method as claimed in claim 1 or 2, characterized in that after pressure-joining the front end of the belt-shaped member (15) to the forming drum (14), the position of the front end of the member (15) is measured, and any one of the excess and the shortage in length of the belt-shaped member is obtained on the basis of both the measured results of the positions of the front and rear ends of the belt-shaped member.

4. A method as claimed in any of claims 1 to 3, characterized by further comprising steps of measuring the position of the rear end of the belt-shaped member (15) in the width direction when measuring the position of the rear end of the belt-shaped member, to obtain the shifted distance of the reap end in the width direction relative to the attaching position on the forming drum (14) on the basis of the measured result of the rear end in the width direction, and moving the grasping unit (68) and the rear end of the belt-shaped member in the width direction so as to make zero the shifted distance before attaching the belt-shaped member to the forming drum.

5. A method as claimed in claim 3, characterized by further comprising steps of measuring the position of the front end of the belt-shaped member (15) in the width direction when measuring the position of the front end of the belt-shaped member, measuring the position of the rear end of the belt-shaped member in the width direction when measuring the position of the rear end of the belt-shaped member, to obtain the shifted distance of the rear end in the width direction relative to the front end of the member (15) on the basis of both the measured results of the front and rear ends in the width direction, and moving the grasping unit (68) and the rear end of the belt-shaped member so as to make zero the shifted distance before attaching the belt-shaped member to the forming drum (14).

6. Apparatus for attaching a belt-shaped member (15) to a forming drum, comprising transfer means (13) for transferring to a forming drum (14) the belt-shaped member cut in a length substantially equal to the circumferential length of the forming drum, pressure-joining means (21) for pressure-joining the front end of the belt-shaped member (15) transferred by the transfer means (13) to a predetermined position on the forming drum (14), measuring means (80) for measuring the position of the rear end of the belt-shaped member whose front end has been pressure-joined with the forming drum, control means (81) for obtaining any one of an excess and a shortage in length of the belt-shaped member relative to a set length on the basis of the measured result obtained by the measuring means (80), a grasping unit (68) for grasping the rear end of the belt-shaped member whose front end has been pressure-joined with the forming drum, and driving means (45) for moving the grasping unit (68) toward and away from the forming drum, the movement of the grasping unit by the driving means (45) being controlled by means of the control means (81) to make zero the one of the excess and the shortage upon completion of attaching the belt-shaped member to the forming drum.

7. Apparatus as claimed in claim 6, characterized by further measuring means (85) for measuring the position of the front end of the belt-shaped member (15) whose front end has been pressure-joined with the forming drum (14), and the one of the excess and shortage in length of the belt-shaped member is obtained by means of the control means (81) on the basis of the measured result from the further measuring means (85) and the measured result from the measuring means (80) for measuring the position of the rear end of the belt-shaped member.

8. Apparatus as claimed in claim 6, characterized in that the grasping unit (68) is so constructed as to be able to move in width directions of the belt-shaped member by the driving means (45), and the measuring means (80) for measuring the rear end of the belt-shaped member (15) is so constructed as to be able to measure the position of the rear end of the member in the width direction, to obtain the shifted distance of the rear end of the belt-shaped member in the width direction relative to the attaching position on the forming drum (14) by means of the control means (81) on the basis of the measured result of the rear end of the member in the width direction, while the moving means is controlled by means of the control means (81) to move the grasping unit (68) and the rear end of the belt-shaped member in the width direction as as to make zero the shifted distance before attaching the belt-shaped member to the forming drum (14).

9. Apparatus as claimed in claim 7, characterized in that the grasping unit (68) is so constructed as to be able to move in width directions of the belt-shaped member by the driving means (45), and the measuring means (80) for measuring the rear end of the belt-shaped member (15) and the further measuring means (85) for measuring the front end of the member (15) are so constructed as to be able to measure the positions of the rear and front ends of the member in the width directions, respectively, to obtain the shifted distance of the rear and front ends of the belt-shaped member in the width directions by means of the control means (81) on the basis of the measured results by both the measuring means (80,85), while the moving means is controlled by means of the control means (81) to move the grasping unit (68) and the rear end of the belt-shaped member in the width directions as as to make zero the shifted distances before attaching the belt-shaped member to the forming drum (14).

FIG_1

23
22
29
12
27
20
43
25
21
15
80
13
15
81
14
11

FIG_2

III
12
35
32
28
34
31
25
26
26
33
IV
27
46
30
29
45
37
46
III
43
36
80
IV

FIG_3

12
35
28
32
34
25
26
31
33
27
45
29
30

FIG_4

54
57
53
43
53
54
44
56
56
52
50
50
59
59
55
51
71
64
51
55
65
64
65
63
72
63
67
73
66
67
60
61
62
15
68
66
62

FIG_5

23
22
12
29
20
27
25
43
85
21
15
80
13
15
81
14
11